# FASCICULE DE BREVET EUROPEEN

(11) **EP 1 663 715 B1**
(45) Date de publication et mention de la délivrance du brevet: **05.12.2007**
(21) Numéro de dépôt: 04787377.3
(22) Date de dépôt: 14.09.2004
(51) Int. Cl.: B60R 7/06

(54) **DISPOSITIF DE RANGEMENT ESCAMOTABLE POUR VEHICULE AUTOMOBILE**
ZURÜCKZIEHBARE LAGERUNGSVORRICHTUNG FÜR EIN KRAFTFAHRZEUG
RETRACTABLE STORAGE DEVICE FOR A MOTOR VEHICLE

(30) Priorité: 16.09.2003 FR 0310863
(43) Date de publication de la demande: 07.06.2006
(73) Titulaire: Faurecia Interieur Industrie, 92000 Nanterre (FR)
(72) Inventeur: STOOF, Freddy, F-68180 Horbour Wihr (FR)
(74) Mandataire: Arnaud, Jean
(86) Numéro de dépôt international: PCT/FR2004/002331
(87) Numéro de publication internationale: WO 2005/028255

(56) Documents cités:
- DE-A- 2 363 163
- DE-A- 3 510 405
- FR-A- 2 792 895

## Description

L'invention concerne un dispositif de rangement en particulier pour véhicule automobile. Il est particulièrement destiné à être disposé dans la planche de bord pour constituer une boîte à gants, mais il peut également être disposé notamment dans un panneau de bord ou dans le coffre.

Le document DE-23 63 163 décrit un dispositif de rangement à simple soufflet, et le document DE-35 10 405 décrit un dispositif de rangement à portillon articulé.

Ce dernier document décrit en particulier un dispositif de rangement 2, en particulier pour véhicule automobile, comprenant une paroi de fond 9 destinée à être fixée par rapport au véhicule, une paroi mobile en une seule pièce formant portillon 5, et une paroi latérale 10 déformable s'étendant entre la paroi de fond et le portillon, ledit dispositif présentant:
une position déployée fermée dans laquelle la paroi de fond 9, la paroi latérale 10 et le portillon 5 définissent entre eux un premier volume de rangement sensiblement clos,
une position déployée ouverte dans laquelle le dispositif présente une ouverture d'accès au premier volume de rangement, le passage de la position fermée a la position ouverte étant obtenu par déplacement du portillon 5, de sorte que ladite ouverture est obturée par le portillon lorsque le dispositif est en position fermée,
une position escamotée fermée dans laquelle ladite ouverture d'accès est obturée par le portillon 5 et, la paroi de fond 9, la paroi latérale 10 et le portillon 5 définissent entre eux un deuxième volume de rangement sensiblement clos.

Aucun ne décrit un portillon dont le côté articulé peut prendre plusieurs positions donnant des volumes différents de rangement.

L'invention vise à améliorer l'ergonomie du véhicule en augmentant la modularité de l'habitacle et/ou du coffre.

Pour ce faire, conformément à l'invention, le dispositif de rangement comprend une paroi de fond destinée à être fixe par rapport au véhicule, une paroi mobile en une seule pièce formant portillon et une paroi latérale déformable s'étendant entre la paroi de fond et le portillon, ledit dispositif présentant :
une position déployée fermée dans laquelle la paroi de fond, la paroi latérale et le portillon définissent entre eux un premier volume de rangement sensiblement clos,
une position déployée ouverte dans laquelle le dispositif présente une ouverture d'accès au premier volume de rangement, le passage de la position fermée à la position ouverte étant obtenu par déplacement du portillon, de sorte que ladite ouverture est obturée par le portillon lorsque le dispositif est en position fermée,
une position escamotée fermée dans laquelle ladite ouverture d'accès est obturée par le portillon et, la paroi de fond, la paroi latérale et le portillon définissent entre eux un deuxième volume de rangement sensiblement clos, inférieur audit premier volume de rangement.

L'encombrement du dispositif est ainsi variable, ce qui permet d'optimiser l'espace à l'intérieur du véhicule.

Avantageusement, conformément à l'invention, en position escamotée fermée, le portillon vient sensiblement au contact de ladite paroi de fond, de sorte que le deuxième volume de rangement est sensiblement nul.

Ainsi, en repliant complètement le dispositif, on récupère l'essentiel du volume du rangement au profit de l'habitacle.

En complément, le dispositif comprend alors avantageusement un logement rigide accolé à ladite paroi de fond.

Selon une caractéristique conforme à l'invention, le dispositif de rangement comprend en outre des moyens d'articulation en rotation pour déplacer le portillon entre la position déployée fermée et la positon déployée ouverte, et lesdits moyens d'articulation sont montés coulissants dans une glissière pour amener le dispositif de la position escamotée fermée à la position déployée fermée et inversement.

Cette solution est relativement simple à mettre en oeuvre, robuste et ergonomique.

De manière complémentaire et conformément à l'invention, le dispositif comprend en outre des moyens pour indexer les moyens d'articulation dans ladite glissière.

Ainsi, le positionnement et le maintien en position du dispositif sont améliorés.

Selon une autre caractéristique avantageuse de l'invention, le portillon est mobile en rotation par l'intermédiaire des moyens d'articulation entre la position escamotée fermée et une position escamotée ouverte dans laquelle ledit dispositif présente un accès audit deuxième volume de rangement.

Il n'est ainsi pas nécessaire de déployer le dispositif pour accéder à son contenu, de sorte que le fait de réduire son encombrement ne grève pas sa facilité d'utilisation.

L'invention va apparaître encore plus clairement dans la description qui va suivre, faite en référence aux dessins annexés dans lesquels :
la figure 1 est une représentation schématique en coupe transversale d'un dispositif conforme à l'invention, en position complètement escamotée fermée,
la figure 2 représente le dispositif de la figure 1 en position déployée fermée,
la figure 3 représente en perspective le dispositif de la figure 1 en position déployée ouverte,
la figure 4 représente à échelle agrandie de la zone repérée IV à la figure 3, sans la planche de bord,
la figure 5 représente à échelle agrandie des moyens de verrouillage dans la zone repérée V à la figure 1,
la figure 6 représente le dispositif de la figure 1 en position partiellement escamotée,
la figure 7 représente une variante du dispositif.

Les figures illustrent une boîte à gants 1 disposée en partie inférieure d'une planche de bord 2, un module 4 de coussin gonflable occupant la partie supérieure de la planche de bord.

La boîte à gants 1 est en regard d'un passager 6 assis à l'intérieur d'un habitacle 8 d'un véhicule automobile. Elle comprend une paroi de fond 10 rigide fixée sur la planche de bord 2, un portillon rigide en une seule pièce 14 articulé en rotation par rapport à la planche de bord 2 suivant un axe de rotation 16 et une paroi latérale 12 souple, pliée en accordéon s'étendant sur trois côtés entre la paroi de fond 10 et le portillon 14.

Le portillon 14 est mobile autour d'un axe de rotation 16 entre une position escamotée fermée dans laquelle la paroi de fond 10, la paroi latérale 12 et le portillon 14 définissent entre eux un volume inté rieur 32 sensiblement clos et une position escamotée ouverte dans laquelle le dispositif présente une ouverture d'accès au volume intérieur 32.

Le portillon 14 est maintenu en position fermée, de manière libérable, par l'intermédiaire de moyens de verrouillage 20 constitués d'une barre 22 de maintien s'étendant suivant une direction d'allongement 24 parallèle à l'axe de rotation 16 et d'un crochet 18 pivotant autour de la direction d'allongement 24 de la barre de maintien 22. La barre de maintien 22 est fixée à la planche de bord 2, tandis que la rotation du crochet 18 est commandée par l'intermédiaire d'une poignée de commande. En agissant sur la poignée de commande, on libère le crochet 18 de la barre 22.

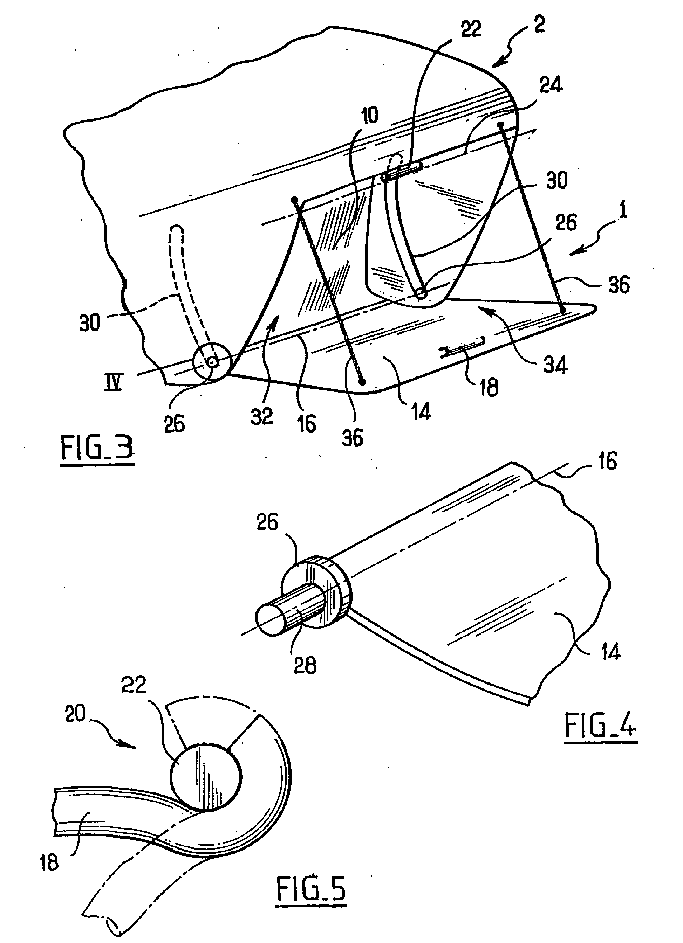

Tel qu'illustré aux figures 3 et 4, la partie inférieure du portillon 14 est maintenue à chaque extrémité du portillon suivant l'axe de rotation 16 par l'intermédiaire d'une bague annulaire 26 et d'un téton escamotable 28. Chaque bague annulaire 26 coulisse dans une rainure 20 formant glissière, ménagée dans la planche de bord. Ces rainures 20 s'étendent suivant une direction circulaire, de manière à conserver une distance constante entre l'axe de rotation 16 et la direction d'allongement 24.

Les tétons escamotables 28 s'insèrent dans des cavités 42 de forme complémentaire ménagées dans la planche de bord 2 à des emplacements prédéterminés (ici trois par rainure) pour y maintenir l'axe d'articulation 16. Les tétons 28 sont montés sur ressorts. Leur escamotage s'effectue à l'aide de moyens usuellement connus et est commandé par une poignée qui peut être la même que celle agissant sur le crochet 18.

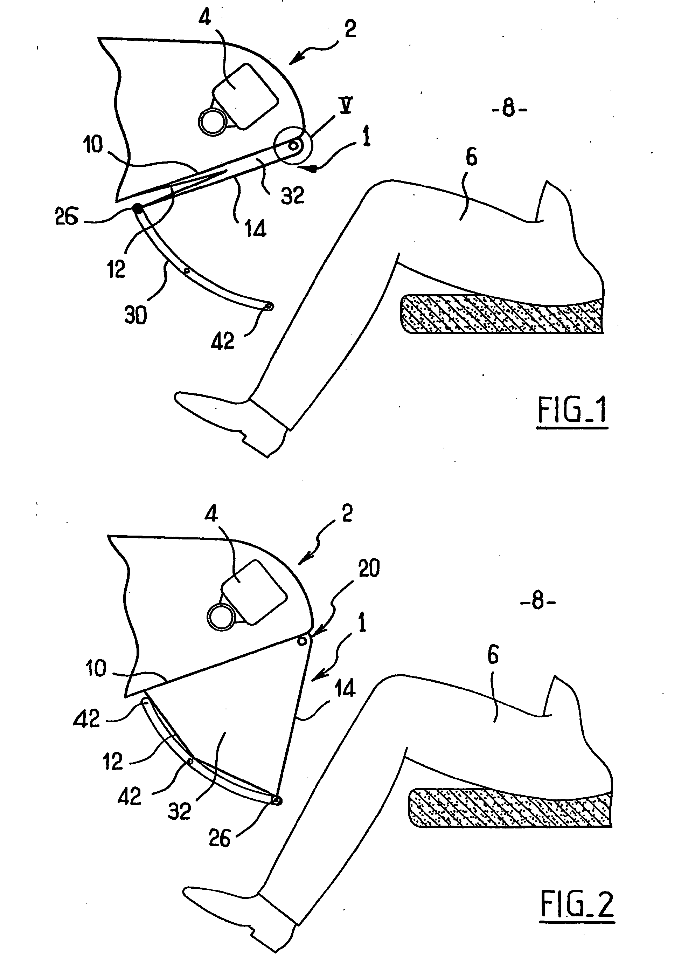

Tel qu'illustré à la figure 1, la boîte à gants est en position complètement escamotée et le portillon 14 est fermé par l'intermédiaire des moyens de verrouillage 20. Dans cette position, la boîte à gants présente un encombrement minimum, la paroi latérale 12 est repliée en accordéon et le portillon est sensiblement au contact de la paroi de fond 10. Le volume intérieur 32 est quasiment nul. Il serait possible d'ouvrir le portillon 14 à l'aide de la poignée de commande. Mais, l'intérêt est ici très faible puisqu'il n'est pas possible de loger d'objet à l'intérieur de la boîte à gants lorsqu'elle est en position complètement escamotée.

En escamotant les tétons 28, on fait coulisser les bagues 26 dans les rainures 30, jusqu'à déployer entièrement la paroi latérale 12. La boîte à gants se trouve alors dans la position déployée, illustrée à la figure 2. Elle est maintenue dans cette position par les tétons 28 qui s'insèrent dans les cavités 42 correspondantes.

La boîte à gants 1 présente alors un volume intérieur 32 maximal. En agissant sur la poignée de commande, on ouvre le portillon 14 pour accéder au volume intérieur 32 par l'intermédiaire d'une ouverture 34. Le portillon est retenu par des cordons souples 36. En relevant le portillon 14, on ramène le crochet 18 autour de la barre de maintien 22 et on active automatiquement les moyens de verrouillage 20.

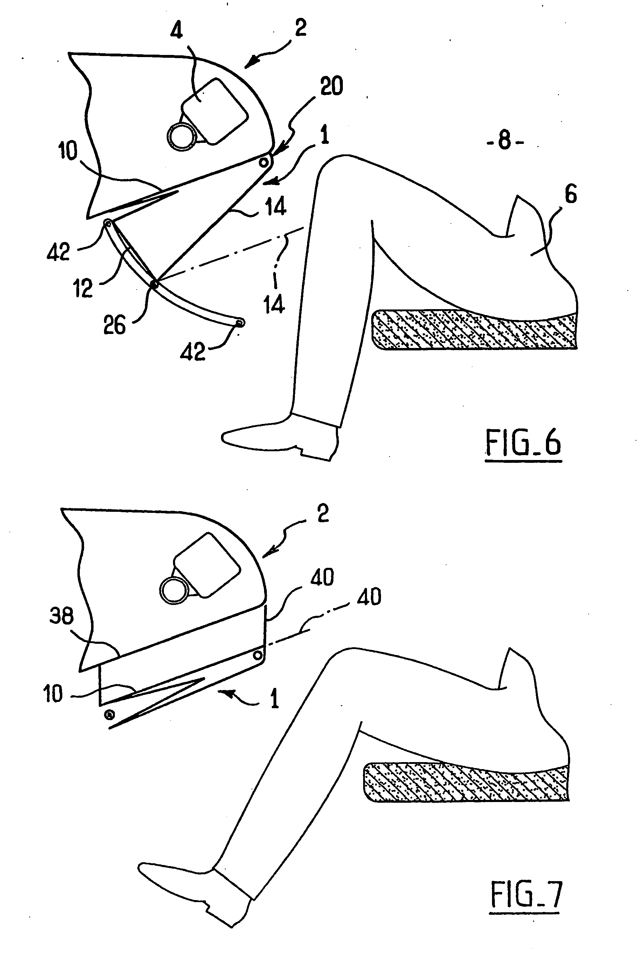

En faisant coulisser les bagues 26 dans les rainures 30, on peut également amener la boîte à gants 1 dans une position intermédiaire partiellement escamotée illustrée à la figure 6. Dans cette position, le volume intérieur 32 est sensiblement égal à la moitié du volume intérieur maximal. Il est possible d'y accéder aisément en ouvrant le portillon 14, comme décrit précédemment. Tel qu'illustré en trait mixte, même en position ouverte, le portillon 14 n'interfère pas avec les jambes du passager 6.

A la figure 5, le crochet 18 est illustré en trait fort dans la position complètement escamotée de la boîte à gants 1 et en trait mixte dans la position déployée de la boîte à gants. Cette figure illustre que les moyens de verrouillage 20 sont opérationnels quel que soit la position de la boîte à gants.

Bien que cela ne soit a priori pas très pratique, il serait possible de déplacer l'axe d'articulation 16 en faisant coulisser les bagues 26 dans les rainures 30, alors que le portillon 14 est ouvert.

La figure 7 illustre une variante de réalisation dans laquelle un logement rigide 38 muni d'une trappe d'accès 40 pivotante est accolé à la paroi de fond 10 de la boîte à gants 1.

## Revendications

1. Dispositif de rangement (1), en particulier pour véhicule automobile (2), comprenant une paroi de fond (10) destinée à être fixe par rapport au véhicule, une paroi mobile en une seule pièce formant portillon (14), et une paroi latérale (12) déformable s'étendant entre la paroi de fond et le portillon, et qu'il comporte en outre des moyens d'articulation (26) en rotation pour déplacer le portillon (14) entre une position déployée fermée et une position déployée ouverte, lesdits moyens d'articulation étant montés coulissants dans une glissière (30) pour amener le dispositif d'une position escamotée fermée à la position déployée fermée et inversement, ledit dispositif étant tel que :
dans la position déployée fermée, la paroi de fond (10), la paroi latérale (12) et le portillon (14) définissent entre eux un premier volume de rangement sensiblement clos,
dans la position déployée ouverte, le dispositif présente une ouverture d'accès (34) au premier volume de rangement, le passage de la position fermée à la position ouverte étant obtenu par déplacement du portillon (14), de sorte que ladite ouverture est obturée par le portillon lorsque le dispositif est en position fermée, et,
dans la position escamotée fermée, ladite ouverture d'accès est obturée par le portillon, et la paroi de fond (10), la paroi latérale (12) et le portillon (14) définissent entre eux un deuxième volume de rangement sensiblement clos inférieur audit premier volume de rangement.

2. Dispositif de rangement selon la revendication 1, **caractérisé en ce qu'**en position escamotée fermée, le portillon (14) vient sensiblement au contact de ladite paroi de fond (10), de sorte que le deuxième volume de rangement est sensiblement nul.

3. Dispositif de rangement selon la revendication 2, **caractérisé en ce qu'**il comprend en outre un logement rigide (38) accolé à ladite paroi de fond (10).

4. Dispositif de rangement selon l'une quelconque des revendications précédentes, **caractérisé en ce qu'**il comprend en outre des moyens (28, 42) pour indexer les moyens d'articulation (26) dans ladite glissière (30).

5. Dispositif de rangement selon l'une quelconque des revendications précédentes, **caractérisé en ce que** le portillon (14) est mobile en rotation par l'intermédiaire des moyens d'articulation entre la position escamotée fermée et une position escamotée ouverte dans laquelle ledit dispositif présente une ouverture d'accès (34) audit deuxième volume de rangement.

6. Dispositif de rangement selon l'une quelconque des revendications précédentes, **caractérisé en que** le portillon (14) est rigide.

## Claims

1. Storage device (1), in particular for a motor vehicle (2) comprising a base wall (10) which is intended to be fixed relative to the vehicle, a movable wall in one piece which forms a door (14) and a deformable lateral wall (12) which extends between the base wall and the door, and further comprising means (26) for articulation in terms of rotation in order to move the door (14) between a closed deployed position and an open deployed position, said articulation means being mounted so as to slide in a sliding rail (30) in order to move the device from a closed retracted position to the closed deployed position and vice-versa, said device being such that:
in the closed deployed position, the base wall (10), the lateral wall (12) and the door (14) together define a substantially closed first storage space,
in the open deployed position, the device has an opening (34) for access to the first storage space, the movement from the closed position to the open position being brought about by displacement of the door (14) so that said opening is blocked by the door when the device is in the closed position, and,
in the closed retracted position, said access opening is blocked by the door and the base wall (10), the lateral wall (12) and the door (14) together define a substantially closed second storage space, below said first storage space.

2. Storage device according to claim 1, **characterised in that**, in the closed retracted position, the door (14) substantially comes into contact with said base wall (10), so that the second storage space is substantially zero.

3. Storage device according to claim 2, **characterised in that** it further comprises a rigid housing (38) which is fitted to said base wall (10).

4. Storage device according to any one of the preceding claims, **characterised in that** it further comprises means (28, 42) for indexing the articulation means (26) in said sliding rail (30).

5. Storage device according to any one of the preceding claims, **characterised in that**, using the articulation means, the door (14) is movable in terms of rotation between the closed retracted position and an open retracted position in which said device has an opening (34) for access to said second storage space.

6. Storage device according to any one of the preceding claims, **characterised in that** the door (14) is rigid.

## Patentansprüche

1. Unterbringungsvorrichtung (1), insbesondere für ein Kraftfahrzeug (2), mit einer Bodenwand (10), die dazu bestimmt ist, bezüglich des Fahrzeuges befestigt zu werden, einer beweglichen Wand aus einem einzigen Stück, welche eine Sperre (14) bildet, und einer verformbaren Seitenwand (12), die sich zwischen der Bodenwand und der Sperre erstreckt, ferner mit Drehanlenkmitteln (26), um die Sperre (14) zwischen einer entfalteten geschlossenen Position und einer entfalteten geöffneten Position zu bewegen, wobei die Anlenkmittel in einer Gleitschiene (30) gleitend angebracht sind, um die Vorrichtung aus einer geschlossenen, eingezogenen Position in die geschlossene entfaltete Position und umgekehrt zu bringen, wobei die Vorrichtung der Art ist, daß:
in der geschlossenen entfalteten Position die Bodenwand (10), die Seitenwand (12) und die Sperre (14) miteinander ein erstes im wesentlichen geschlossenes Unterbringungsvolumen bilden,
in der geöffneten, entfalteten Position die Vorrichtung eine Zugangsöffnung (34) zu dem ersten Unterbringungsvolumen aufweist, wobei der Übergang von der geschlossenen Position in die geöffnete Position durch Verschieben der Sperre (14) derart erhalten wird, daß die Öffnung durch die Sperre verschlossen wird, wenn sich die Vorrichtung in geschlossener Position befindet, und
in der geschlossenen, eingezogenen Position die Zugangsöffnung durch die Sperre verschlossen wird und die Bodenwand (10), die Seitenwand (12) und die Sperre (14) miteinander ein zweites im wesentlichen geschlossenes Unterbringungsvolumen unterhalb des ersten Unterbringungsvolumens bilden.

2. Lagerungsvorrichtung nach Anspruch 1, **dadurch gekennzeichnet, daß** in geschlossener, eingezogener Position die Sperre (14) im wesentlichen mit der Bodenwand (10) derart in Kontakt kommt, daß das zweite Unterbringungsvolumen im wesentlichen null beträgt.

3. Unterbringungsvorrichtung nach Anspruch 2, **dadurch gekennzeichnet, daß** sie ferner eine steife Aufnahme (38) aufweist, die an der Bodenwand (10) angefügt ist.

4. Unterbringungsvorrichtung nach einem der vorhergehenden Ansprüche, **dadurch gekennzeichnet, daß** sie ferner Mittel (28, 42) aufweist, um die Anlenkmittel (26) in die Gleitschiene (30) einzupassen.

5. Unterbringungsvorrichtung nach einem der vorhergehenden Ansprüche, **dadurch gekennzeichnet, daß** die Sperre (14) in Drehung mittels Anlenkmitteln zwischen der geschlossenen, eingezogenen Position und einer geöffneten, eingezogenen Position beweglich ist, in welcher die Vorrichtung eine Zugangsöffnung (34) zu dem zweiten Unterbringungsvolumen aufweist.

6. Unterbringungsvorrichtung nach einem der vorhergehenden Ansprüche, **dadurch gekennzeichnet, daß** die Sperre (14) steif ist.
